# EUROPEAN PATENT SPECIFICATION

(11) **EP 3 484 301 B1**
(45) Date of publication and mention of the grant of the patent: **07.04.2021**
(21) Application number: 17749535.5
(22) Date of filing: 12.07.2017
(51) Int. Cl.: A22C 17/00, B02C 18/30, B65G 33/24

(54) **REVERSIBLY REMOVABLE AND WASHABLE FIXED CROSSPIECE**
REVERSIBLER LÖSBARER UND WASCHBARER FESTER QUERTRÄGER
TRAVERSE FIXE REVERSIBLE, AMOVIBLE ET LAVABLE

(30) Priority: 14.07.2016 IT 201600073487
(43) Date of publication of application: 22.05.2019
(73) Proprietor: Quadrana, Marcello, 40069 Zola Predosa (BO) (IT)
(72) Inventor: Quadrana, Marcello, 40069 Zola Predosa (BO) (IT)
(74) Representative: Fiammenghi, Eva
(86) International application number: PCT/IB2017/054205
(87) International publication number: WO 2018/011729

(56) References cited:
- EP-A1- 0 536 030
- EP-B1- 1 777 010
- GB-A- 727 387
- US-A1- 2004 163 932

## Description

### Field of the art

The present invention refers to the mechanical industry. More in detail, the present invention refers to a distinctive washable and removable crosspiece configured in a manner such to reduce the vibrations of the auger of the meat processing plant, preventing the wear of the animal meat mincing industrial plant for producing sausages, typically for producing mortadella.

### Prior art

Pork cold cuts and in particular sausages are generally raw or cooked meat-based food-stuffs containing salt, animal fat, spices, preservatives (if any), and that are inserted into closed containers, conventionally constituted by animal intestines.

Modern technology provides for that fresh meat reaches the production plant in separately frozen anatomic pieces of swine. After reaching an ideal temperature for processing thereof, this meat is minced and turned into a creamy emulsion through various stages in special meat mincing machines.

Furthermore, additives are added subsequently and the mixture thus obtained is stuffed into the casing at the desired amounts. The casings used for stuffing can be natural or artificial and the latter are usually used for the smaller dimensions. In addition, the sausage is subjected to cooking using special dry air ovens, within times that vary from a few hours up to a whole day depending on the amount and it is important that the internal temperature reaches 70°C. Then their follows sprinkling using cold water and storage in a cooler to stabilise the product. The quality of a sausage mainly depends on factors such as the quality of the raw material utilised, for instance the composition, the chemical-physical characteristics and microbiological characteristics, the additives utilised, storage, distribution of the finished product definitely as well as the production technology applied. Though it can be deemed advanced, the latter reveals some drawbacks lying in the need for performing specific process steps by means of components and systems that can - at times - entail problems regarding the damage and early wear of the very components and which often affect the properties of the finished product.

In detail, the meat is transmitted to the cutting devices after a first processing carried out by an auger connected, at the end part thereof, to a fixed crosspiece. An object of the latter is to eliminate the rotary movement imparted to the meat by the rotation of the auger and transfer said meat to the cutters positioned downstream without the latter still tending to move in a rotary motion (see e.g. EP 1 777 010 B1).

It should be observed that while the auger arranged upstream and the cutters arranged downstream rotate constantly, the crosspiece remains stationary and in industrial plants known at the state of the art it is neither removed nor demounted ever. This entails various problems including the impossibility to perform any checking, maintenance or replacement operation. With reference to the portion upstream of the crosspiece of the meat processing plant, the auger that transfers the meat to be minced from the introduction hopper to the crosspiece and to the cutting devices arranged downstream is contained in a special containment cylinder which serves the two purposes of preventing meat leakage and limiting the oscillations of the auger. It should be observed that the oscillations are rather consistent in that the pressure of the meat that is pressed towards the crosspiece is equivalent to about 4 tons of load. Right due to the oscillations during the operating step, each time the auger comes to contact with the inner surface of the containment cylinder, metal chips are released into the meat, with the known negative consequences regarding the quality of the sausage and the health of the consumers. Another drawback related to this malfunctioning which, as of date, is common with all meat mincing plants lies in the wear of both the auger and the containment cylinder.

Over the last years, the various proposed solutions, have almost exclusively addressed the cutters or rotary elements of the minced meat or sausages industrial production machines.

The object of the present industrial invention patent application, described in detail herein, is to provide an innovative type of fixed crosspiece, preferably to be used in sausage production plants, that can be easily mounted and demounted and thus provided with a cleaning system of the water type, capable of enabling an easy disconnection of the crosspiece from the industrial machine it is part of.

Another object of the present patent application is to preserve the auger and other parts with which the latter could come to contact against excessive and early wear.

The use of the crosspiece subject of the present invention, in the production of minced meat and, more in detail, sausages, entails enhancing the efficiency of the functionality thereof and the extension of the durability of the entire machine, with respect to known systems.

### Description of the invention

According to the present invention, a crosspiece to be used in industrial meat production plants according to claim 1, specifically in the step of cutting/mincing the meat, is provided.

With respect to common crosspieces already widely utilised for the same purpose, the one described in detail hereinafter has the advantage of being easy to demount from the machine, for the purpose of performing operations for the maintenance, washing or replacement of the piece; the aforementioned operations having been particularly difficult if not impossible to perform up to date.

Another advantage of the crosspiece 100 in question lies in the fact that the central circular hole 11 is suitably dimensioned to enable engagement with the terminal part 130 of the auger 110 of the meat processing plant. More in detail, the central circular hole 11 of the crosspiece 100 will be dimensioned to enable engagement with the terminal part 130 so that the auger 110 can rotate but avoiding the transmission of the rotation forces to the crosspiece 100, which must remain stationary. Even more in detail, in order to avoid the occurrence of resistance against the rotation of the auger 110, the lubrication of the central circular hole 11 of said crosspiece 100 is carried out by the meat itself which, containing a fat part, lubricates it as it passes through the central circular hole 11.

Advantageously, this configuration of the plant is suitable to prevent the auger 110, oscillating due to the strong pressure exerted by the transiting meat, from coming into contact with the inner surface of the containment cylinder 120 thus causing the wear of the parts and the release of metal chips into the meat.

Just like crosspieces already available in the market, the crosspiece of the present invention is made up of a central body 10, centrally provided with said circular hole 11 and provided with a plurality of fixed radial arms 12, terminating in a perimeter circular crown 13, concentric with respect to said circular hole 11. Said crosspiece 100 has the function of nullifying the rotational force that the auger of the processing plant transfers to the meat. Thus, the crosspiece 100 enables the meat being processed to be transferred to the meat mincer cutters arranged downstream, without any rotational inertia.

Another distinctive feature of said crosspiece 100, which constitutes one of the main advantages with respect to the other crosspieces currently in use, consists in the possibility of disconnecting the central body 10 from the fixed support 20 on which it is mounted. Said central body 10 is actually advantageously provided with a plurality of coupling systems 15, arranged on the outer surface of the perimeter crown 13 at the intersection with the central axis of each radial arm 12. Said coupling systems 15, are suitable to be stably but advantageously reversibly engaged with the corresponding coupling systems 25 arranged on the inner surface of the fixed support 20. The latter is advantageously constituted by an irremovable and concentric circular crown with respect to said central body 10. Thus, said crosspiece 100, can take an open configuration, in which the central body 10 can be advantageously disconnected from said fixed support 20, by simply slipping it off. Engaging said central body 10 with said fixed support 20 instead enables advantageously obtaining a locked configuration, in which the disconnection of the two elements is hindered by said coupling systems 15, 25. In addition, as a safety device aimed at guaranteeing that said locked configuration is maintained during the operation of the meat mincing plant, a locking pin 30 is advantageously inserted into a special hole arranged on the outer surface of said fixed support 20, to hold said central body 10 in said locked configuration.

Advantageously, said coupling system 15, 25 is preferably constituted by a system of the male-female type in particular, provided with a coupling projection 15 arranged on the perimeter crown 13 of the central body 10, and by a corresponding coupling recess 25 arranged on the inner surface of the fixed support 20. Thanks to this particular coupling projection 15 and coupling recess 25 configuration, the locked configuration will be obtained by reversibly rotating the central body 10 with respect to the fixed support 20 up to a predetermined stop point.

A further and substantial advantage offered by the present invention, consists in the possibility of washing the coupling systems 15, 25, so as to facilitate connection and disconnection operations. To this end, the outer surface of said fixed support 20, is provided with at least one water inlet hole 23, suitable to be stably and reversibly engaged with a water inlet device 22. Said water inlet hole 23, advantageously conveys the water, or any other cleaning and/or lubricating liquid, into at least one inner channel 26, terminating with at least one water outlet hole 24, suitably positioned at each coupling recess 25 of said fixed support 20.

In this manner, introducing water or liquid at a pressure comprised between 10 and 100 bars, preferably 20 bars, will facilitate efficiently removing any meat residues present in the coupling system 15, 25 and the disconnection and re-connection of the central body 10 with the fixed support 20.

Preferably, there will be four equally spaced radial arms 12 and thus there will be four coupling systems 15, 25. In addition, said radial arms 12 will have a thickness comprised between 1 cm and 10 cm, preferably 5 cm.

Advantageously, said fixed support 20 will preferably be provided with a plurality of water inlet holes 22, each at each coupling system 25. Even more preferably, to each water inlet hole 22, there will correspond a single inner channel 26, substantially rectilinear, that will conduct the water or liquid towards a single water outlet hole 24.

In addition, each of the water inlet devices 22 that the crosspiece 100 is made up of is advantageously provided with a corresponding tap 31, that can be reversibly opened and closed by means of a common external knob. The opening of said tap 31 obviously enables the flow of water or liquid for washing the crosspiece 100 so as to disconnect the central body 10 from the fixed support 20. Closing said tap 31 instead advantageously hinders chances of the minced meat flowing back into the various water inlet devices 22, during the operation of the plant. More in detail, the knob for controlling said tap 31, will be at the side downstream of the crosspiece 100, i.e. the opposite side with respect to the one the meat to be minced is coming from.

Advantageously, the positioning of the water outlet holes 24 is such to enable the washing and lubrication of said coupling system 15, 25 when the latter is found in said second locked configuration.

A further advantage of the crosspiece 100 of the present invention, lies in the fact that it can be made of any natural or synthetic material preferably a metal or metal alloy material.

### Description of the figures

The invention will be described hereinafter in at least one preferred embodiment, provided by way of non-limiting example, with reference to the attached figures, wherein:

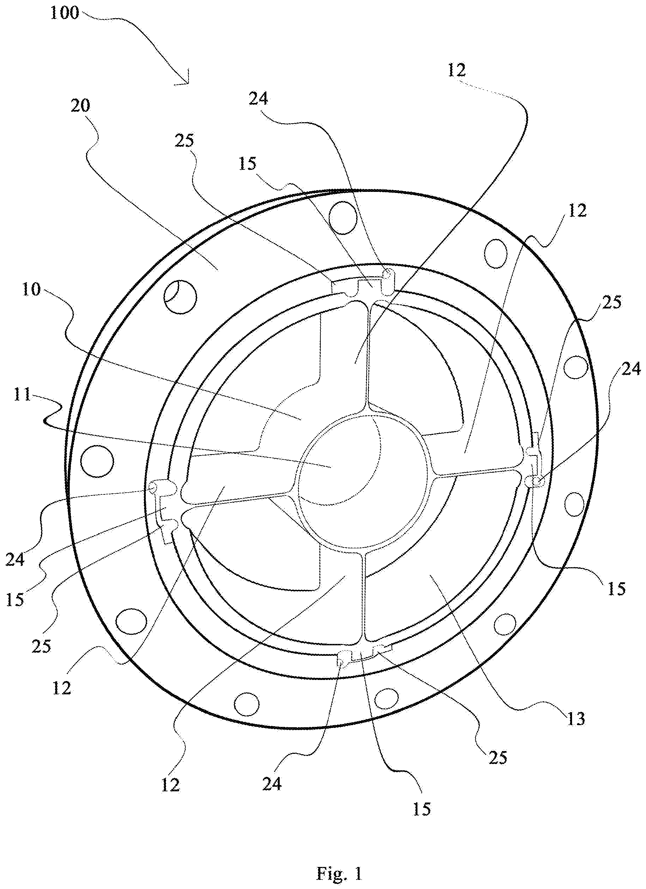

- FIGURE 1 shows a three-dimensional view of the crosspiece 100 in the open configuration, in which the central body 10 is shown with the circular hole 11 and four radial arms 12 that terminate in the perimeter crown 13 provided with four coupling projections 15; the fixed support 20 with the coupling recesses 25 within which a water outlet hole 24 is shown.

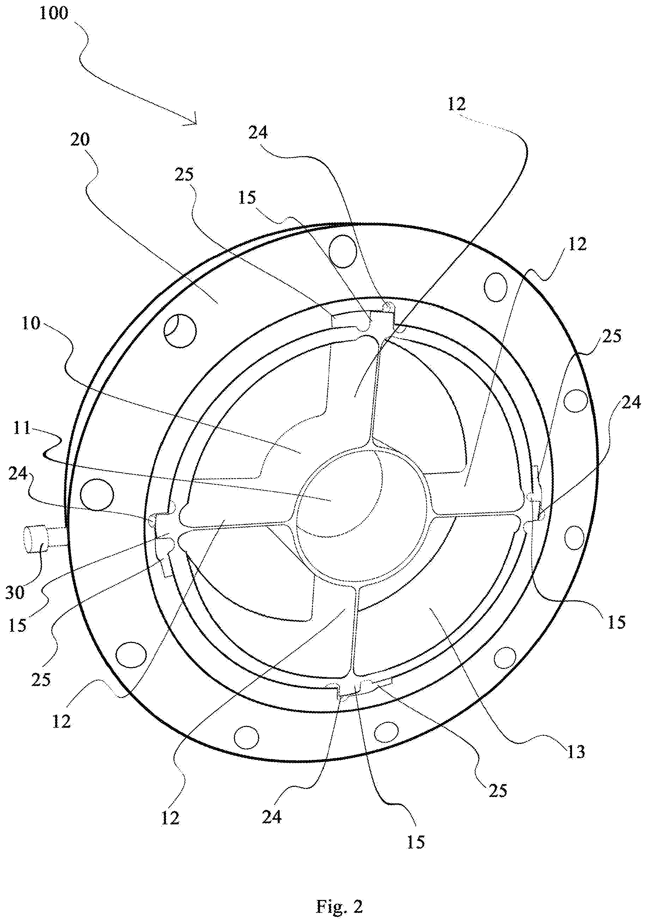

- FIGURE 2 is very similar to the previous FIG. 1 but, this time, the crosspiece 100 is in locked configuration, in which it is impossible to disconnect the two main elements; in detail, the central body 10 is shown with the circular hole 11 and four radial arms 12 that terminate in the perimeter crown 13 provided with four coupling projections 15; the fixed support 20 is also shown, with the coupling recesses 25 and some water outlet holes 24 that are covered by the coupling projections 15 when the central body 10 is rotated and locked with respect to the fixed support 20; given that the crosspiece 100 is in locked configuration, the locking pin 30 inserted laterally with respect to the fixed support 20 to hinder disconnection with the central body 10, is observable.

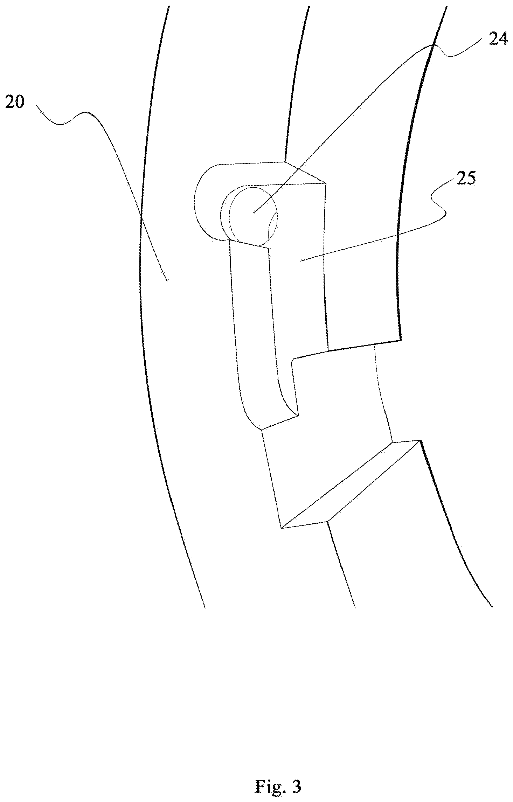

- FIGURE 3 shows the detail of one of the coupling recesses 25 of the fixed support 20 in which the preferred embodiment of the groove and the position of the water outlet hole 24 is clearly visible.

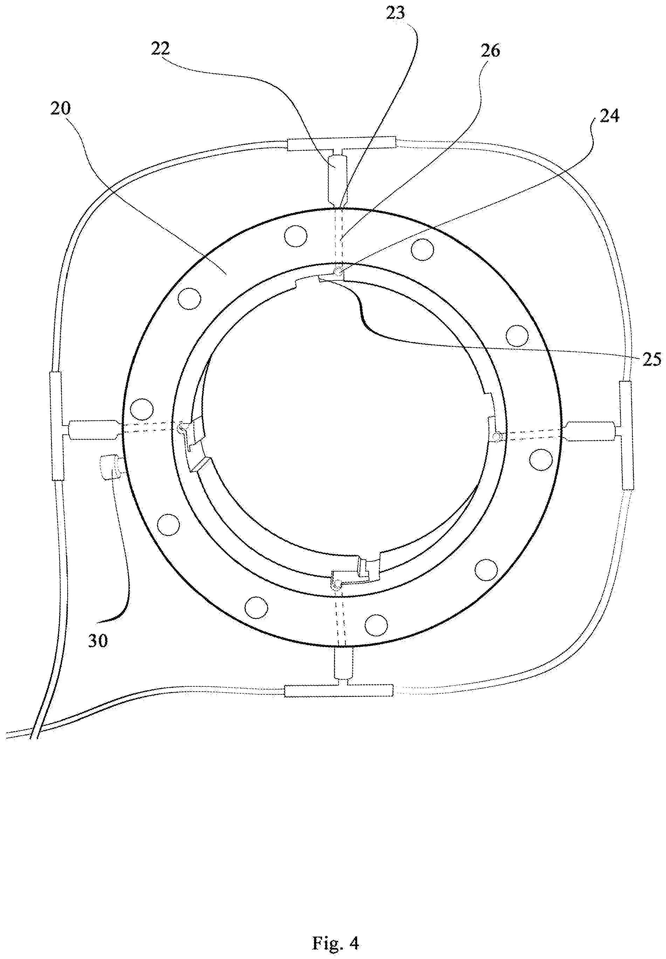

- FIGURE 4 shows the preferred embodiment of the washing system constituted by four water inlet devices 22, one at each coupling recess 25 of the fixed support 20. Thanks to the plurality of water inlet devices 22 that are fixedly engaged in the corresponding water inlet holes 23, the inner channels 26 are rectilinear up to the water outlet hole 24, arranged in the coupling recess 25. Furthermore, at each water inlet device 22, the knob for closing and opening the tap 31 is observed, to enable or hinder the flow of water and prevent the meat from flowing back into the water inlet circuit when the plant is running.

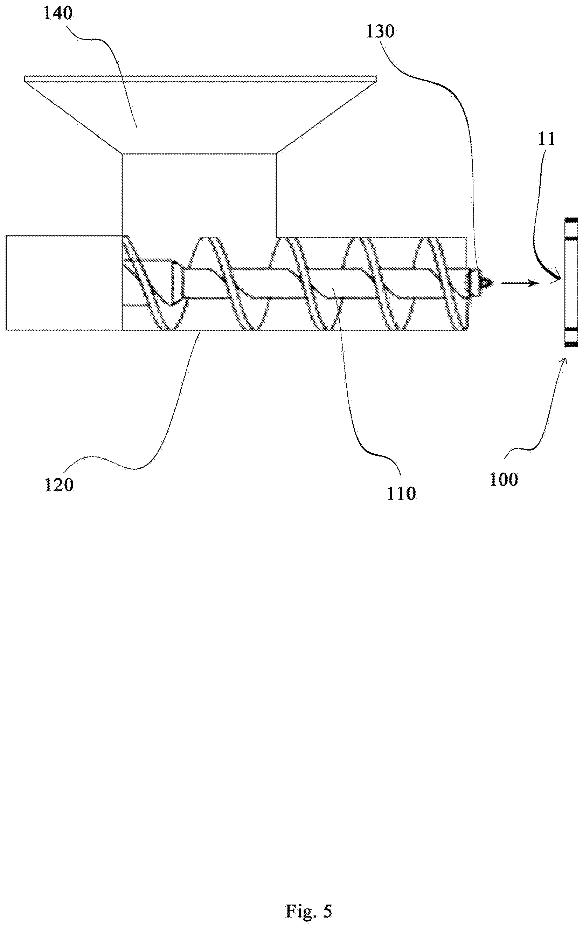

- FIGURE 5 shows a diagram of a portion of the meat mincing plant showing the hopper 140 in which the meat to be minced is introduced still in frozen state, the auger 110 inside the containment cylinder 120 and the terminal portion 130 of said auger 110 which is inserted into the central circular hole 11 of the crosspiece.

### Detailed description of the invention

Now, the present invention will be illustrated purely by way of non-limiting example, with reference to the figures illustrating some embodiments regarding the present inventive concept.

Similarly, to the known cutting devices for the same applications regarding the present invention, the crosspiece 100 in question has a central body 10, centrally provided with a circular hole 11, from which there departs four radial arms 12, with thickness comprised between 1 cm and 10 cm, preferably 5 cm, terminating in a perimeter crown 13, concentric to said circular hole 11. The dimensioning of the main body 10 is such to hinder the transfer of the rotational forces imparted by the auger to the crosspiece 100 too, whose position is fixed during the processing of the meat. As a matter of fact, the purpose thereof is to stop the rotational forces that such auger imparts to the meat to be processed and thus said meat - without any rotational inertia - to the cutters arranged downstream of the machine.

As extensively represented in FIG. 5, the central circular hole 11 of said crosspiece 100 is also configured to enable the engagement with the terminal part 130 of the meat transmission crosspiece 110. More in detail, all minced meat production plants, including those known up to date, are configured so that the hopper 140 transfers meat to the auger 110 and the latter is contained in a special containment cylinder 120 which has the purpose of avoiding the leakage of meat. Given that the meat is introduced frozen, it should be observed that the pressure that the latter exerts on the auger 110 reaches values amounting to about 4 tons. Given the enormous loads, the augers 110, currently used up to date, are also subject to strong oscillations that lead to contact with the inner surface of the containment cylinder 120. Thus, the central circular hole 11 of the crosspiece 100 of the present invention is suitably dimensioned and configured to be engaged with the terminal part 130 of the auger 100 so as to limit the oscillations and prevent contact with the containment cylinder 120. This fundamental solution enables preventing the wear of the auger 110, of the containment cylinder 120 and the dispersion of harmful metal residues into the meat.

Even more in detail, the connection between the terminal part 130 of the auger 110 and the central circular hole 11 of the crosspiece 100 does not require sliding and lubrication elements in that the meat itself, with its fat, will lubricate the circular hole 11.

Said main body 10 is mounted on a fixed support 20 constituted by an irremovable circular crown concentric thereto.

As previously mentioned, the crosspiece 100 in question, is characterised by its ability to easily and reversibly disconnect the main body 10 from the fixed support 20 on which it is mounted. The advantages offered by this innovative possibility are revolutionary in industrial sausage production plants. Disconnecting the main body 10 from the fixed support 20 actually enables facilitating and making maintenance operations, required for a correct operation of this crucial component of the machine, inexpensive. Also, the potential replacement of the worn-out piece would not entail, in a plant provided for by the present invention, any operation on the other components of the plant.

With reference to FIGS 1 and 2, the two configurations are represented that can be obtained thanks to the preferred coupling system 15, 25. In particular this is a system of the male-female type in which --- on the outer surface of the perimeter crown 13 of the main body 10coupling projections 15 are arranged, while --- on the inner surface of the fixed support 20the corresponding coupling recesses 25 are arranged. Even more in detail, said coupling projections 15, are implemented at the central longitudinal axis of each radial arm 12. Said coupling system 15, 25, can be positioned in a first open configuration (FIG. 1), suitable to enable the disconnection of the central body 10 by simply slipping it off from the fixed support 20. Said coupling system 15, 25 is also susceptible to take a second locked configuration (FIG. 2), obtained by reversibly rotating the central body 10 with respect to the fixed support 20 up to a predetermined stop point.

In this second configuration, it will be impossible to disconnect the central body 10 from the fixed support 20, unless upon performing a counter-rotation in the opposite direction with respect to the movement of the previously described movement to be carried out to lock the two components.

At least one locking pin 30 is arranged on the outer surface of said fixed support 20 in order to ensure that the locked configuration is maintained over the period of time in which the plant is running. The latter is suitable to be reversibly engaged in a corresponding hole, suitable to mechanically lock the position of said central body 10 with respect to said fixed support 20.

After a prolonged use of the meat mincing machine, regarding which the crosspiece 100 of the present invention represents a crucial component, the meat residues happen to penetrate into any possible space or hole, thus complicating the disconnection of the central body 10 from the fixed support 20. Thus, the fixed support 20 is provided, on the outer surface thereof, with at least one water inlet hole 23, suitable to be stably and reversibly engaged with a water inlet device 22. The water, or any other cleaning and/or lubricating liquid is conveyed through a system of inner channels 26 (FIG. 4) to a plurality of water outlet holes 24, arranged in the coupling recesses 25.

In order to efficiently remove any meat residue, the pressure of such liquid must be necessarily high, preferably comprised between 10 bars and 100 bars, even more preferably 20 bars.

The water outlet holes 24, are suitably positioned and dimensioned to enable the cleaning of the entire coupling system 15, 25, when the crosspiece 100 is in the second locked configuration.

In the preferred embodiment, said fixed support 20 is provided with four water inlet holes 23, each of which corresponds to a single substantially rectilinear inner channel 26 that leads to a single corresponding water outlet hole 24. This so as not to cause pressure drop in the water or liquid path, between said inlet hole 23 and said outlet hole 24.

It is crucial to point out that, for every water inlet device 22, a tap 31 is provided, that can be actuated by the user by means of a common knob, suitable to be opened to enable the passage of the water flow, when the meat mincing plant is not running, so as to enable the washing and thus the disconnection of the central body 10 from the fixed support 20. Alternatively, the tap 31 will be closed by the user so as to hinder the possibility of the minced meat flowing back into the washing circuit when the plant is running.

Even more in detail, the knobs of the taps 31 of each water inlet device 22, are preferably arranged at the side downstream of the crosspiece 100, i.e. on the side opposite to the meat reception side.

Lastly, it is clear that the invention described up to now may be subjected to modifications, additions or variants obvious to a man skilled in the art, without departing from the scope of protection outlined by the attached claims.

## Claims

1. Reversibly removable and washable crosspiece (100), for processing animal meat, comprising a central body (10), suitable to stop the rotation of the meat deriving from the rotary action of an auger (110) arranged inside a containment cylinder (120) and suitable to transfer the meat to be processed from a hopper (140) for introducing meat into said crosspiece (100), said central body (140) being centrally provided with a circular hole (11) provided with a plurality of fixed radial arms (12), terminating in a perimeter circular crown (13), concentric to said circular hole (11), wherein said circular hole (11) is suitably dimensioned and configured to be rotatably coupled with an end part (130) of said auger (110) avoiding excessive oscillation thereof and said circular hole (11) being suitable to allow the rotation of said end part (130) of said auger (110) avoiding the transmission of rotary forces to said crosspiece (100), said circular hole (11) being suitable to be lubricated by the fat of the meat passing through the plant; and wherein said perimeter crown (13) is provided with a plurality of coupling systems (15), arranged on the outer surface at the intersection with the central axis of each radial arm (12), suitable to be coupled in a stable but reversible fashion with the corresponding coupling systems (25) arranged on the inner surface of a fixed support (20), constituted by a circular crown irremovable and concentric with respect to said central body (10); said coupling system (15, 25) being of the type comprising a first open configuration, suitable to allow the disconnection of the central body (10) by simply slipping it off the fixed support (20), susceptible to take a second locked configuration, obtained by reversibly rotating the central body (10) with respect to the fixed support (20) up to a predetermined stop point; said fixed support (20) being provided, on the outer surface thereof, with a locking pin (30) which can be reversibly screwed into a corresponding hole, arranged on the outer surface of said fixed support (20) to hold said configuration locked during the operation of the meat mincing plant; said fixed support (20) further being provided with at least one water inlet hole (23), suitable to be stably and reversibly coupled with a water inlet device (22); said fixed support (20) also being provided with at least one inner channel (26) suitable to connect said water inlet hole (23) with a plurality of water outlet holes (24), suitably positioned at every coupling system (25), the water jet or any other cleaning liquid jet being suitable to remove any meat residue and allow an easy disconnection and connection of the central body (10) with the fixed support (20); said water inlet device (22) being provided with a tap (31), suitable to take, upon activation by the user, an open position, **characterised in that** it allows the through flow of said water or cleaning liquid flow, or a closed position, in which both the through flow of water or said cleaning liquid and the back flow of the processed meat through said water inlet hole (23) up to inside the water inlet device (22) are hindered.

2. Reversibly removable and washable crosspiece (100), according to the preceding claim 1, **characterised in that** the oscillation reduction action performed by the central circular hole (11) with respect to said auger (110) is suitable to prevent said auger (110) from impacting or coming into contact with the inner surface of the containment cylinder (120) in which said auger (110) is arranged.

3. Reversibly removable and washable crosspiece (100), according to claim 1 or 2, **characterised in that** said fixed support (20) is provided with a plurality of water inlet holes (22), preferably each at every coupling system (25).

4. Reversibly removable and washable crosspiece (100), according to claim 3, **characterised in that** said fixed support (20) is made up of a plurality of inner channels (26), obtained in the thickness of said fixed support (20), equivalent to the number of water inlet holes (22) and **in that** said inner channels (26) have a substantially rectilinear development.

5. Reversibly removable and washable crosspiece (100), according to any one of the preceding claims, **characterised in that** said water inlet device (22) is suitable to introduce water, or any other cleaning and/or lubricating liquid commonly available in the market, into the relative water inlet hole (23), at a pressure suitably efficient to remove the meat processing residual material, comprised between 10 and 100 bars, preferably 20 bars.

6. Reversibly removable and washable crosspiece (100), according to any one of the preceding claims, **characterised in that** said tap (31) is provided with a knob suitable to enable the user to confer to said tap (31) said open or closed configuration, said knob being arranged at the side downstream of said crosspiece (100) i.e. the opposite side with respect to the minced meat reception side.

7. Reversibly removable and washable crosspiece (100), according to any one of the preceding claims, **characterised in that** said coupling system (15, 25) is made up of a coupling projection (15) arranged on the perimeter crown (13) of the central body (10), corresponding to a coupling recess (25) arranged on the inner surface of the fixed support (20).

8. Reversibly removable and washable crosspiece (100), according to any one of the preceding claims, **characterised in that** said water outlet holes (24) are suitable to clean and lubricate said coupling system (15, 25) when the latter is in said second locked configuration.

9. Reversibly removable and washable crosspiece (100), according to any one of the preceding claims, **characterised in that** said central body (10) is provided with four equally spaced radial arms (12).

10. Reversibly removable and washable crosspiece (100), according to any one of the preceding claims, **characterised in that** the thickness of the radial arms (12) is comprised between 1 cm and 10 cm, preferably 5 cm.

11. Reversibly removable and washable crosspiece (100), according to any one of the preceding claims, **characterised in that** it is made of any natural or synthetic plastic material or any metal or metal alloy.

## Patentansprüche

1. Reversibel lösbarer und waschbarer Querträger (100) zum Verarbeiten von Tierfleisch mit einem zentralen Körper (10), der geeignet ist, die Drehung des Fleisches zu stoppen, die sich aus der Drehbewegung einer Schnecke (110) ergibt, die innerhalb eines Aufnahmezylinders (120) angeordnet ist und die geeignet ist, das zu verarbeitende Fleisch von einem Trichter (140) zum Einführen von Fleisch in den Querträger (100) zu überführen, wobei der zentrale Körper (140) zentral mit einem kreisförmigen Loch (11) versehen ist, das mit mehreren festen radialen Armen (12) versehen ist, die in einer zu dem kreisförmigen Loch (11) konzentrischen, kreisförmigen Umfangskrone (13) enden, wobei das kreisförmige Loch (11) geeignet dimensioniert und dazu ausgebildet ist, drehbar mit einem Endteil (130) der Schnecke (110) gekoppelt zu werden, wobei eine übermäßige Oszillation derselben vermieden wird, und wobei das kreisförmige Loch (11) geeignet ist, die Drehung des Endteils (130) der Schnecke (110) zu ermöglichen, wobei die Übertragung von Drehkräften auf den Querträger (100) vermieden wird, wobei das kreisförmige Loch (11) geeignet ist, durch das Fett des Fleisches, das durch die Anlage hindurchgeht, geschmiert zu werden; und wobei die Umfangskrone (13) mit mehreren Kopplungssystemen (15) versehen ist, die auf der äußeren Oberfläche am Schnittpunkt mit der Zentralachse eines jeden radialen Arms (12) angeordnet sind und geeignet sind, auf eine stabile, aber reversible Weise mit den entsprechenden Kopplungssystemen (25) gekoppelt zu werden, die auf der inneren Oberfläche eines festen Trägers (20) angeordnet sind, der durch eine nicht abnehmbare, kreisförmigen, in Bezug auf den zentralen Körper (10) konzentrische Krone gebildet ist; wobei das Kopplungssystem (15, 25) von dem Typ ist, der eine erste, offene Konfiguration aufweist, die geeignet ist, das Trennen des zentralen Körpers (10) durch einfaches Losmachen von dem festen Träger (20) zu ermöglichen, und dafür empfänglich ist, eine zweite, verriegelte Konfiguration einzunehmen, die durch reversibles Drehen des zentralen Körpers (10) in Bezug auf den festen Träger (20) bis zu einem vorgegebenen Anschlagspunkt erhalten wird; wobei der feste Träger (20) an seiner äußeren Oberfläche mit einem Verriegelungsstift (30) versehen ist, der reversibel in ein entsprechendes Loch geschraubt werden kann, das an der äußeren Oberfläche des festen Trägers (20) angeordnet ist, um die Konfiguration während des Betriebs der Fleischwolfanlage verriegelt zu halten; wobei der feste Träger (20) weiterhin mit mindestens einem Wassereinlassloch (23) versehen ist, das geeignet ist, stabil und reversibel mit einer Wassereinlassvorrichtung (22) gekoppelt zu werden; wobei der feste Träger (20) außerdem mit mindestens einem inneren Kanal (26) versehen ist, der geeignet ist, das Wassereinlassloch (23) mit mehreren Wasserauslasslöchern (24) zu verbinden, die in geeigneter Weise an jedem Kopplungssystem (25) positioniert sind, wobei der Wasserstrahl oder jeder andere Reinigungsflüssigkeitsstrahl geeignet ist, jegliche Fleischreste zu entfernen und ein einfaches Trennen und Verbinden des zentralen Körpers (10) mit dem festen Träger (20) zu ermöglichen; wobei die Wassereinlassvorrichtung (22) mit einem Hahn (31) versehen ist, der geeignet ist, bei Betätigung durch den Benutzer eine offene Position einzunehmen, **dadurch gekennzeichnet, dass** er den Durchfluss des Wassers oder der Reinigungsflüssigkeit zulässt, oder eine geschlossene Position, in der sowohl der Durchfluss von Wasser oder der Reinigungsflüssigkeit als auch der Rückfluss des verarbeiteten Fleisches durch das Wassereinlassloch (23) bis in das Innere der Wassereinlassvorrichtung (22) verhindert wird.

2. Reversibel lösbarer und waschbarer Querträger (100) gemäß dem vorhergehenden Anspruch 1, **dadurch gekennzeichnet, dass** die durch das zentrale kreisförmige Loch (11) in Bezug auf die Schnecke (110) ausgeführte Oszillationsreduktionswirkung geeignet ist, zu verhindern, dass die Schnecke (110) auf die innere Oberfläche des Aufnahmezylinders (120), in dem die Schnecke (110) angeordnet ist, auftrifft oder mit ihr in Kontakt gelangt.

3. Reversibel lösbarer und waschbarer Querträger (100) gemäß Anspruch 1 oder 2, **dadurch gekennzeichnet, dass** der feste Träger (20) mit mehreren Wassereinlasslöchern (22) versehen ist, vorzugsweise jeweils an jedem Kopplungssystem (25).

4. Reversibel lösbarer und waschbarer Querträger (100) gemäß Anspruch 3, **dadurch gekennzeichnet, dass** der feste Träger (20) aus mehreren inneren Kanälen (26) besteht, die in der Dicke des festen Trägers (20) erhalten werden, die der Anzahl der Wassereinlasslöcher (22) entsprechen, und dadurch, dass die inneren Kanäle (26) einen im Wesentlichen geradlinigen Verlauf besitzen.

5. Reversibel lösbarer und waschbarer Querträger (100) gemäß einem der vorhergehenden Ansprüche, **dadurch gekennzeichnet, dass** die Wassereinlassvorrichtung (22) geeignet ist, Wasser oder jede andere auf dem Markt gewöhnlich verfügbare Reinigungs- und/oder Schmierflüssigkeit in das jeweilige Wassereinlassloch (23) mit einem Druck einzubringen, der geeignet ist, das Restmaterial der Fleischverarbeitung zu entfernen, und der zwischen 10 und 100 bar, vorzugsweise 20 bar, aufweist.

6. Reversibel lösbarer und waschbarer Querträger (100) gemäß einem der vorhergehenden Ansprüche, **dadurch gekennzeichnet, dass** der Hahn (31) mit einem Knopf versehen ist, der geeignet ist, es dem Benutzer zu ermöglichen, dem Hahn (31) die offene oder verriegelte Konfiguration zu verleihen, wobei der Knopf an der Seite stromabwärts des Querträgers (100), d.h. der in Bezug auf die Hackfleischaufnahmeseite gegenüberliegenden Seite, angeordnet ist.

7. Reversibel lösbarer und waschbarer Querträger (100) gemäß einem der vorhergehenden Ansprüche, **dadurch gekennzeichnet, dass** das Kopplungssystem (15, 25) aus einem Kopplungsvorsprung (15) besteht, der an der Umfangskrone (13) des zentralen Körpers (10) angeordnet ist und mit einer Kopplungsaussparung (25), die an der inneren Oberfläche des festen Trägers (20) angeordnet ist, korrespondiert.

8. Reversibel lösbarer und waschbarer Querträger (100) gemäß einem der vorhergehenden Ansprüche, **dadurch gekennzeichnet, dass** die Wasserauslasslöcher (24) geeignet sind, das Kopplungssystem (15, 25) zu reinigen und zu schmieren, wenn sich letzteres in der zweiten, verriegelten Konfiguration befindet.

9. Reversibel lösbarer und waschbarer Querträger (100) gemäß einem der vorhergehenden Ansprüche, **dadurch gekennzeichnet, dass** der zentrale Körper (10) mit vier gleichmäßig beabstandeten radialen Armen (12) versehen ist.

10. Reversibel lösbarer und waschbarer Querträger (100) gemäß einem der vorangehenden Ansprüche, **dadurch gekennzeichnet, dass** die Dicke der radialen Arme (12) zwischen 1 cm und 10 cm, vorzugsweise 5 cm, aufweist.

11. Reversibel lösbarer und waschbarer Querträger (100) gemäß einem der vorhergehenden Ansprüche, **dadurch gekennzeichnet, dass** er aus einem beliebigen natürlichen oder synthetischen Kunststoffmaterial oder einem/einer beliebigen Metall oder Metalllegierung gemacht ist.

## Revendications

1. Traverse amovible de manière réversible et lavable (100), pour traiter de la viande animale, comprenant un corps central (10), apte à arrêter la rotation de la viande résultant de l'action rotative d'une vis sans fin (110) disposée à l'intérieur d'un cylindre contenant (120) et apte à transférer la viande à traiter d'une trémie (140) pour introduire de la viande dans ladite traverse (100), ledit corps central (140) étant pourvu de manière centrale d'un trou circulaire (11) pourvu d'une pluralité de bras radiaux fixes (12), se terminant par une couronne circulaire périmétrique (13), concentrique par rapport audit trou circulaire (11), dans laquelle ledit trou circulaire (11) est dimensionné et configuré de manière appropriée pour être couplé en rotation à une partie d'extrémité (130) de ladite vis sans fin (110) évitant une oscillation excessive de celle-ci et ledit trou circulaire (11) étant apte à permettre la rotation de ladite partie d'extrémité (130) de ladite vis sans fin (110) évitant la transmission de forces de rotation à ladite traverse (100), ledit trou circulaire (11) étant apte à être lubrifié par la matière grasse de la viande passant à travers l'installation ; et dans laquelle ladite couronne circulaire périmétrique (13) est pourvue d'une pluralité de systèmes de couplage (15), disposés sur la surface extérieure à l'intersection avec l'axe central de chaque bras radial (12), aptes à être couplés de manière stable mais réversible aux systèmes de couplage (25) correspondants disposés sur la surface intérieure d'un support fixe (20), constitué par une couronne circulaire non amovible et concentrique par rapport audit corps central (10) ; ledit système de couplage (15, 25) étant du type comprenant une première configuration ouverte, apte à permettre le détachement du corps central (10) en le glissant simplement hors du support fixe (20), susceptible de prendre une deuxième configuration verrouillée, obtenue par rotation réversible du corps central (10) par rapport au support fixe (20) jusqu'à un point d'arrêt prédéterminé ; ledit support fixe (20) étant pourvu, sur sa surface extérieure, d'une broche de verrouillage (30) qui peut être vissée de manière réversible dans un trou correspondant, disposé sur la surface extérieure dudit support fixe (20) pour tenir ladite configuration verrouillée pendant le fonctionnement de l'installation de hachage de viande ; ledit support fixe (20) étant en outre pourvu d'au moins un trou d'entrée d'eau (23), apte à être couplé de manière stable et réversible à un dispositif d'entrée d'eau (22) ; ledit support fixe (20) étant également pourvu d'au moins un conduit intérieur (26) apte à relier ledit trou d'entrée d'eau (23) à une pluralité de trous de sortie d'eau (24), positionnés de manière appropriée à chaque système de couplage (25), le jet d'eau ou tout autre jet de liquide de nettoyage étant apte à éliminer tout résidu de viande et à permettre un détachement et une liaison faciles du corps central (10) avec le support fixe (20) ; ledit dispositif d'entrée d'eau (22) étant pourvu d'un robinet (31), apte à prendre, lors de l'actionnement par l'utilisateur, une position ouverte, **caractérisée en ce qu'**elle permet l'écoulement traversant dudit écoulement d'eau ou de liquide de nettoyage, ou une position fermée, dans laquelle à la fois l'écoulement traversant d'eau ou dudit liquide de nettoyage et le reflux de la viande traitée à travers ledit trou d'entrée d'eau (23) jusqu'à l'intérieur du dispositif d'entrée d'eau (22) sont entravés.

2. Traverse amovible de manière réversible et lavable (100) selon la revendication 1, **caractérisée en ce que** l'action de réduction d'oscillation réalisée par le trou circulaire central (11) par rapport à ladite vis sans fin (110) est apte à empêcher ladite vis sans fin (110) d'impacter ou de venir en contact avec la surface intérieure du cylindre contenant (120) dans lequel ladite vis sans fin (110) est disposée.

3. Traverse amovible de manière réversible et lavable (100) selon la revendication 1 ou 2, **caractérisée en ce que** ledit support fixe (20) est pourvu d'une pluralité de trous d'entrée d'eau (22), de préférence chacun à chaque système de couplage (25).

4. Traverse amovible de manière réversible et lavable (100) selon la revendication 3, **caractérisée en ce que** ledit support fixe (20) est composé d'une pluralité de conduits intérieurs (26), obtenus dans l'épaisseur dudit support fixe (20), équivalente au nombre de trous d'entrée d'eau (22) et **en ce que** lesdits conduits intérieurs (26) ont un développement sensiblement rectiligne.

5. Traverse amovible de manière réversible et lavable (100) selon l'une quelconque des revendications précédentes, **caractérisée en ce que** ledit dispositif d'entrée d'eau (22) est apte à introduire de l'eau, ou tout autre liquide de nettoyage et/ou de lubrification couramment disponible sur le marché, dans le trou d'entrée d'eau (23) relatif, à une pression convenablement efficace pour éliminer le matériau résiduel de traitement de viande, comprise entre 10 et 100 bar, de préférence 20 bar.

6. Traverse amovible de manière réversible et lavable (100) selon l'une quelconque des revendications précédentes, **caractérisée en ce que** ledit robinet (31) est pourvu d'un bouton apte à permettre à l'utilisateur de conférer audit robinet (31) ladite configuration ouverte ou fermée, ledit bouton étant disposé du côté aval de ladite traverse (100), c'est-à-dire du côté opposé par rapport au côté réception de viande hachée.

7. Traverse amovible de manière réversible et lavable (100) selon l'une quelconque des revendications précédentes, **caractérisée en ce que** ledit système de couplage (15, 25) est composé d'une saillie de couplage (15) disposée sur la couronne périmétrique (13) du corps central (10), correspondant à un creux de couplage (25) disposé sur la surface intérieure du support fixe (20).

8. Traverse amovible de manière réversible et lavable (100) selon l'une quelconque des revendications précédentes, **caractérisée en ce que** lesdits trous de sortie d'eau (24) sont aptes à nettoyer et lubrifier ledit système de couplage (15, 25) quand ce dernier est dans ladite deuxième configuration verrouillée.

9. Traverse amovible de manière réversible et lavable (100) selon l'une quelconque des revendications précédentes, **caractérisée en ce que** ledit corps central (10) est pourvu de quatre bras radiaux (12) équidistants.

10. Traverse amovible de manière réversible et lavable (100) selon l'une quelconque des revendications précédentes, **caractérisée en ce que** l'épaisseur des bras radiaux (12) est comprise entre 1 cm et 10 cm, de préférence 5 cm.

11. Traverse amovible de manière réversible et lavable (100) selon l'une quelconque des revendications précédentes, **caractérisée en ce qu'**elle est composée de toute matière plastique naturelle ou synthétique ou de tout métal ou alliage de métal.
